# EUROPÄISCHE PATENTANMELDUNG

(11) **EP 1 564 088 A1**
(43) Veröffentlichungstag der Anmeldung: **17.08.2005**
(21) Anmeldenummer: 05002634.3
(22) Anmeldetag: 09.02.2005
(51) Int. Cl.: B60R 21/34

(54) **Vordere Motorraumverkleidung eines Kraftfahrzeuges mit einer Fussgängeraufprallschutzfunktion**

(30) Priorität: 10.02.2004 DE 102004006406
(71) Anmelder: Daimler Chrysler AG, 70567 Stuttgart (DE)
(72) Erfinder: Hägele, Klaus, 73572 Heuchlingen (DE); Kleineberg, Wolfgang, 75365 Calw (DE); Wogh, Erwin, 73230 Kirchheim (DE)

(57) **Zusammenfassung**

Eine vordere Motorraumverkleidung eines Kraftfahrzeuges mit einer Lage unterhalb eines vorderen Kraftfahrzeug-Stoßfängerträgers mit einer im wesentlichen glatten Unterseite und einer Fußgängeraufprallschutzfunktion, soll rationell herstellbar und funktionell hochwirksam sein.

Zu diesem Zweck zeichnet sich eine solche Motorraumverkleidung durch folgende Merkmale aus
- die Motorraumverkleidung ist zweischalig ausgeführt,
- die beiden, die Motorraumverkleidung bildenden Schalen (1, 2) nämlich eine untere Schale (1) und eine obere Schale (2), sind fest miteinander verbunden,
- die miteinander verbundenen Schalen (1, 2) besitzen in hauptsächlich Fahrzeuglängsrichtung versteifende Längsrippen (3),
- die Längsrippen (3) sind als geschlossene Hohlprofile ausgebildet mit einer von der Verbindungsebene der Schalen (1, 2) gebildeten Teilungsebene, wobei die Ebene lokale Berge und Täler aufweisen kann.

## Beschreibung

Die Erfindung betrifft eine vordere Motorraumverkleidung eines Kraftfahrzeuges mit einer Fußgängeraufprallschutzfunktion nach dem Oberbegriff des Patentanspruchs 1.

Ein mit Bezug auf einen Fußgängeraufprallschutz ausgebildeter Kraftwagenbug ist aus WO 02/074570 A1 bekannt. Als Fußgängeraufprallschutzmaßnahmen im vorgenannten Sinne werden solche. Maßnahmen verstanden, durch die ein Fußgänger bei einer Kollision mit dem Kraftwagenbug zuerst mit einem relativ weit unten liegenden Aufprallschutz in Verbindung kommt, durch den im unteren Beinbereich des Aufprallopfers ein Bewegungsimpuls vom Kraftwagenbug weg erzeugt wird, so dass der Fußgänger um seinen Körperschwerpunkt ausgelenkt und sein Oberkörper hierdurch in Richtung der Motorhaube bewegt wird. Dabei soll der betreffende Aufprallschutz bei Aufprallbeginn in einem geringem Maße nachgiebig sein, damit in dem Beinbereich des Fußgängers keine zu hohen, das Bein irreversibel beschädigenden Scherkräfte auftreten können. Nach einer geringen Nachgiebigkeit in einer Anfangsphase des Aufpralls soll der Aufprallschutz dagegen ausreichend steif sein, um seine Funktion, den Fußgänger um seinen Körperschwerpunkt auf die Motorhaube lenken zu können, erfüllen zu können.

Bei dem vorgenannten Stand der Technik nach WO 02/074570 A1 wird der Aufprallschutz durch ein unterhalb eines Stoßfängers angebrachtes Luftführungsteil erzeugt, das bei einem Frontalaufprall mit der Stoßfängerverkleidung zusammenwirkt. Dabei versteift das Luftführungsteil die Stoßfängerverkleidung in einem dem Stoßfänger vorgelagerten Bereich. Insgesamt stützt sich das Luftführungsteil an der Bodentragstruktur des Fahrzeuges ab. Dieses Luftführungsteil erstreckt sich über nahezu die gesamte Kraftwagenbreite.

Die Erfindung beschäftigt sich mit dem Problem, bei einem bei vielen Fahrzeugen ohnehin bereits als Bodenverkleidung aus aerodynamischen Gründen oder als Teil einer geräuschisolierenden Motorraumkapselung unterhalb des Stoßfängers vorhandenen Motorraumverkleidung einen rationell herstellbaren und funktionell hohen Unfallschutzansprüchen genügenden Fußgängeraufprallschutz zu schaffen.

Gelöst wird dieses Problem durch die Ausführung einer gattungsgemäßen Motorraumverkleidung mit den kennzeichnenden Merkmalen des Patentanspruchs 1.

Vorteilhafte und zweckmäßige Ausgestaltungen, auf die nachstehend noch näher eingegangen werden wird, sind Gegenstand der Unteransprüche.

Die Erfindung beruht auf dem allgemeinen Gedanken, eine im Bugbereich eines Kraftfahrzeuges ohnehin als Bodenverkleidung bereits vorhandene Motorraumverkleidung anordnungs- und stabilitätsmäßig unter möglichst geringer Veränderung der Bodenverkleidungsfunktion derart zu modifizieren, dass ein Höchstmaß an Fußgängeraufprallschutz erreicht werden kann.

Um an einer üblichen vorderen, unteren Motorraumverkleidung Bugschürzen möglichst wenig verändern zu müssen, sieht die Erfindung eine Lösung vor, bei der dieser Bereich der Bodenverkleidung in einer an sich bereits im wesentlichen vorhandenen Form erhalten bleibt und lediglich durch ein in der Form im wesentlichen gleiches schalenförmiges Bauteil zu einem Sandwich-Bauelement umgewandelt wird. Um dabei die notwendige Stabilität in Aufprallrichtung mit einem möglichst geringen Materialaufwand, das heißt mit möglichst dünnwandigen Sandwichplatten beziehungsweise Schalen erreichen zu können, wird in dem Sandwichbauelement eine Verrippung in Fahrzeuglängsrichtung vorgesehen beziehungsweise eine solche Verrippung, die hauptsächlich in Fahrzeuglängsrichtung versteifend wirkt. Dies bedeutet, dass in Querrichtung beabstandet Längsrippen verlaufen. Diese können insbesondere in den Seitenbereichen der Verkleidung eine Neigung in der Horizontalebene gegenüber der Fahrzeuglängsrichtung besitzen.

Die Längsrippen sind zur Erzielung einer hohen Steifigkeit als geschlossene Hohlprofile ausgebildet. Die geschlossenen Hohlprofile ergeben sich bei einem Zusammenfügen der Sandwich-Schalen, das heißt die Hohlprofilquerschnitte besitzen eine Teilungsebene, die sich mit der Verbundebene der Sandwich-Schalen der vorderen Motorraumverkleidung deckt. Die Verbundebene zwischen den Sandwich-Schalen kann Täler und Berge aufweisen, wobei Täler und Berge gegenüberliegender Schalen jeweils komplementär zueinander ausgebildet sind. Dieses "Relief" ist in Richtung der Krafteinwirkung orientiert, das heißt "ausgesteift", während quer zur Krafteinwirkung eine Nachgiebigkeit im Sinne einer gewissen Weichheit erhalten bleibt.

Als Bodenverkleidung soll die Verkleidung von unten möglichst glattflächig ausgebildet sein. Daher werden die aus den Schalen-Oberflächen herausragenden Rippenbereiche bevorzugt in die obenliegende Sandwich-Schale eingeformt. Die Unterschale bildet bei diesen Rippen im wesentlichen lediglich einen Verschluss zur Erzielung eines stabilitätsoptimierten Hohlprofiles.

Insbesondere für den Fall, dass im Bereich der Vorderkante der Motorraumverkleïdung ein Kühler von oben dicht auf diesen Verkleidungsbereich aufgesetzt werden soll, ist in dem betreffenden Bereich ein im wesentlichen glatter Quersteg auf der Oberseite der oberen Schale vorzusehen. In diesem Fall liegt der aus der Oberfläche zumindest einer der beiden Schalen herausragende Rippenbereich in der Unterschale. Hierdurch ist es möglich, in Fahrzeuglängsrichtung Rippen mit einem Hohlprofilquerschnitt durch den vorgenannten Quersteg mit etwa einem gleichen Hohlprofilquerschnitt hindurch laufen zu lassen, um möglichst über die gesamte Erstreckung der vorderen Motorraumverkleidung in hauptsächlich Fahrzeugslängsachse eine durchgehende gleiche Hohlquerschnitt-Verrippung erhalten zu können.

Zur Erzielung eines echten Sandwich, das heißt Verbundbauteiles, bestehend aus zwei aneinanderliegenden Schalen, werden die beiden aufeinanderliegenden Schalen mit Bezug auf die gesamte gegenseitige Auflagefläche miteinander fest verbunden. Eine solche feste Verbindung kann wahlweise alternativ oder kumulativ erreicht werden durch gegenseitige Verschweißung, Verklebung, Verclipsung, Vernietung oder Verschraubung. Die vorgenannten Befestigungsarten können jeweils lokal begrenzt, jedoch beabstandet über die gesamte gemeinsame Auflagefläche verteilt sein. Eine Verklebung kann dabei selbstverständlich auch ganzflächig erfolgen. Als Schweißverfahren eignen sich besonders Reibschweißen und Ultraschallschweißen. Als Materialien für die miteinander zu einem Sandwich-Bauteil als vordere Motorraumverkleidung zu verbindenden Schalen eignet sich bevorzugt Kunststoff, der besonders rationell beispielsweise als Spritzguss- oder Pressteil hergestellt werden kann. Grundsätzlich möglich ist es selbstverständlich, zumindest eine oder auch beide der Schalen aus Blech zu verwenden.

Ein besonders vorteilhaftes, nachstehend noch näher erläutertes Ausführungsbeispiel ist in der Zeichnung dargestellt.

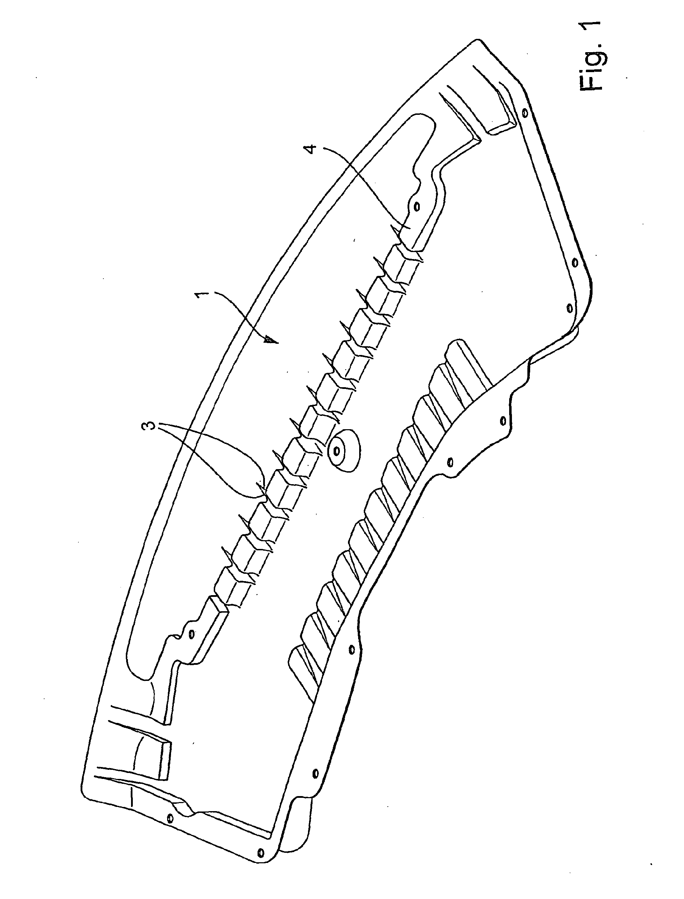

In dieser zeigen jeweils in perspektivischer Ansicht
- Fig. 1: eine Unterschale einer vorderen unteren Motorraumverkleidung,
- Fig. 2: eine zugehörige Oberschale,
- Fig. 3: eine Explosionsdarstellung eines aus den Schalen nach Fig. 1 und 2 bestehenden MotorraumverkleidungsBereiches.

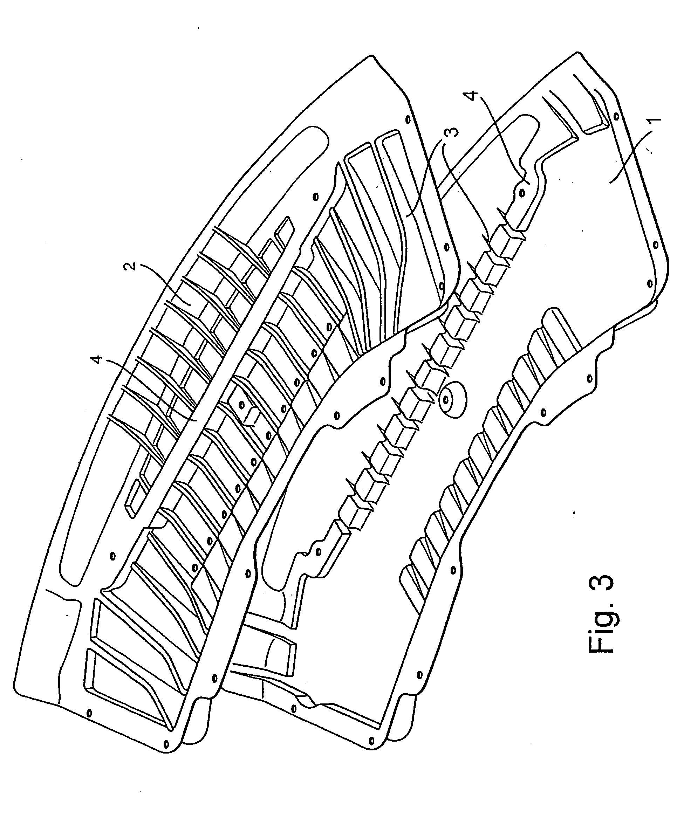

Eine vordere Motorraumverkleidung in der Form einer Fahrzeugunterboden-Bodenverkleidung, die gleichzeitig eine Fußgängeraufprallschutzfunktion erfüllt, ist als ein Sandwich-Bauteil aus einer Kunststoff-Unterschale 1 und einer ebenfalls aus Kunststoff bestehenden Oberschale 2 zusammengesetzt entsprechend der Explosionsdarstellung in Fig. 3.

Die beiden Schalen 1, 2 können insbesondere durch eine Reibverschweißung miteinander verbunden sein. Die Reibverschweißung ist dabei über jeweils lokal begrenzte Bereiche gegeben, wobei sich diese lokal verschweißten Bereiche über den gesamten Auflageflächenbereich zwischen den beiden Schalen 1 und 2 erstrecken können. Wahlweise oder zusätzlich können die beiden Schalen 1, 2 miteinander verschraubt sein, wozu lediglich beispielhaft in den beiden Schalen 1 und 2 Durchgangsbohrungen für entsprechenden Schraub- oder Nietverbindungen gezeichnet sind.

Bei der dargestellten vorderen Motorraumverkleidung ist die rechts liegende Kante der Vorderseite des Fahrzeugbugs zugewandt, während die linke hintere Kante beispielsweise an einem üblichen Vorderwagen-Querträger befestigt werden kann.

Die vordere Motorraumverkleidung ist insgesamt in einer unterhalb des vorderen Stoßfängers liegenden Höhe angebracht. Die übliche Stoßfängerverkleidung umgreift auch die Vorderkante dieser Motorraumverkleidung. Zwischen der Stoßfängerverkleidung und der Vorderkante jener Motorraumverkleidung ist allerdings zweckmäßigerweise ein Abstand von beispielsweise 5 bis 10 mm vorgesehen, um geringfügige, teilweise reversible Verformungen der Stoßfängerverkleidung ohne Beeinflussung der angrenzenden Motorraumverkleidung ermöglichen zu können.

In der als Beispiel gezeichneten Form der beiden Schalen 1, 2 können diese insbesondere als Kunststoffspritzgussteile oder als Kunststoffpressteile hergestellt sein.

Die zur Erfüllung eines Fußgängeraufprallschutzes erforderliche Steifigkeit der vorderen Motorraumverkleidung in Fahrzeuglängsrichtung erhält diese durch eine hauptsächlich in dieser Richtung verlaufende Verrippung durch in Fahrzeugquerrichtung jeweils beabstandete Längsrippen 3 mit jeweils einem geschlossenen Hohlquerschnitt.

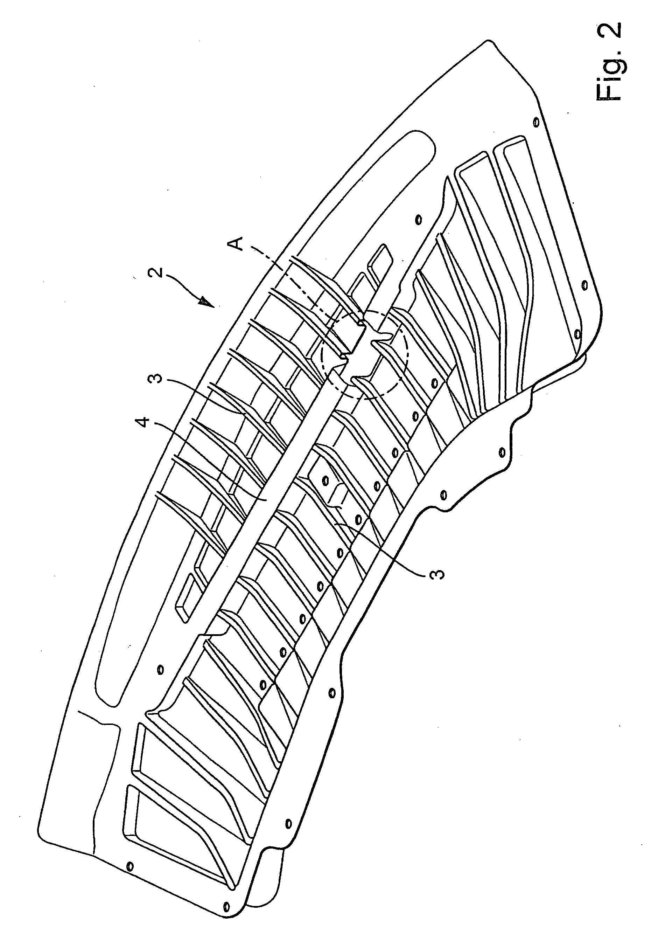

Der geschlossene Hohlquerschnitt wird durch das Aufeinanderlegen der beiden Schalen 1 und 2 erreicht. Der nach außen über die Oberfläche einer Schale 1, 2 hinausragende Rippenbereich wird bevorzugt in die obere Schale 2 gelegt, während die Unterschale zumindest nach außen eine im wesentlichen glatte Oberfläche aus aerodynamischen Gründen besitzen soll. Die Längsrippen 3 verlaufen jeweils durchgehend mit einem Hohlquerschnitt über die gesamte Länge der vorderen Motorraumverkleidung in Fahrzeuglängsrichtung. Dies wird nachfolgend noch näher erläutert und zwar mit Bezug auf einen in einem Abschnitt A in der Fig. 2 aufgebrochenen LängsrippenBereich.

Der aufgebrochene Längsrippenbereich A befindet sich an einem Quersteg 4 der Oberschale 2.

Der vorgenannte Quersteg 4 hat die Aufgabe, einen Kühler, wenn ein solcher in einem Fahrzeugbug an dieser Stelle als Zusatzkühler vorgesehen ist, dicht aufnehmen zu können. Ist ein solcher Zusatzkühler in einem Fahrzeugbug vorhanden, sind in der vorderen Motorraumverkleidung in dem Bereich zwischen dem Quersteg 4 und der Vorderkante vertikale Durchgangsöffnungen zwischen den Längsrippen 3 für eine Luftführung vorzusehen. Bei dem gezeichneten Ausführungsbeispiel sind solche Luftführungs-Öffnungen nicht vorhanden. Es ist jedoch leicht vorstellbar, wie solche Luftdurchführungsöffnungen direkt vor dem Quersteg 4 zwischen den Längsrippen 3 ohne Beeinträchtigung der durch die Längsrippen 3 gebildeten Steifigkeit angebracht sein können.

Wie die Aufbruchdarstellung in dem Bereich A der Fig. 2 erkennen lässt, ist der aus der Oberfläche einer Schale herausragende Rippenbereich bei den Längsrippen 3 in dem Abschnitt zwischen der hinteren Kante der vorderen Motorraumverkleidung und dem Quersteg 4 aus der Oberschale 2 nach oben erhaben herausgeformt. Die Unterschale 1 dient in diesem Bereich lediglich dazu, die U-förmige Hohlrippe zu einem geschlossenen Profilhohlraum zu verschließen. Der Hohlprofilquerschnitt der Längsrippen 3 in dem Bereich hinter dem Quersteg 4 setzt sich im Prinzip durch den Quersteg 4 hindurch bis in den vorderen Bereich der Motorraumverkleidung fort. Die erhaben aus einer der beiden Schalen 1, 2 herausragenden Bereiche der Längsrippen 3 sind auch in dem vorderen Verkleidungsbereich aus der Oberschale 3 nach oben ausgeformt, ebenso wie in dem Bereich hinter dem Quersteg 4.

In dem Bereich des Quersteges 4, in dem die Oberfläche in der Oberschale 2 nach außen im wesentlichen glatt verläuft, ist der aus einer Schale 1 bzw. 2 erhaben nach außen herausragende Bereich dagegen in der Unterschale 1 vorgesehen. Dabei ist die Rippenform dort so gewählt, dass praktisch ein durch den Quersteg 4 hindurchgehender gleicher Hohlprofilquerschnitt der Längsrippen 3 gewährleistet ist.

In einem zwischen der Hinter- und Vorderkante der vorderen Motorraumverkleidung im Prinzip gleichartigen Hohlprofilquerschnittsverlauf der Längsrippen 3 über gegebenenfalls einen in der Verkleidung vorhandenen Quersteg 4 hinweg ist ein wesentlicher Aspekt der Erfindung zu sehen. Dieser besteht darin, durch einen über den gesamten Bereich zwischen vorderer und hinterer Kante einer vorderen Motorraumverkleidung etwa gleichmäßigen Verlauf von Längsrippen 3 die für einen Personenaufprallschutz erforderliche Steifigkeit des vorderen Verkleidungsbereiches sicher erreichen und gewährleisten zu können. Insbesondere eine Kunststoffausführung der erfindungsgemäßen vorderen Motorraumverkleidung erlaubt eine bei einem Aufprall in der Aufprallanfangsphase notwendige Nachgiebigkeit dieses Verkleidungsbereiches in hauptsächlich Fahrzeuglängsrichtung bei automatisch erhöhter Steifigkeit nach Beendigung der Aufprallanfangsphase.

Damit der erfindungsgemäße Fußgängeraufprallschutz über die gesamte Breite eines Fahrzeugbugs gegeben ist, ist die vordere Motorraumverkleidung über diesen Gesamtbereich anzubringen.

### Bezugszeichenliste

- 1: untere Schale
- 2: obere Schale
- 3: Längsrippen
- 4: Quersteg

## Patentansprüche

1. Vordere Motorraumverkleidung eines Kraftfahrzeuges mit einer Lage unterhalb eines vorderen Kraftfahrzeug-Stoßfängerträgers mit einer im wesentlichen glatten Unterseite und einer Fußgängeraufprallschutzfunktion, **gekennzeichnet durch** die Merkmale,
- die vordere Motorraumverkleidung ist zweischalig ausgeführt,
- die beiden, die vordere Motorraumverkleidung bildenden Schalen (1, 2) nämlich eine untere Schale (1) und eine obere Schale (2), sind fest miteinander verbunden,
- die miteinander verbundenen Schalen (1, 2) besitzen in hauptsächlich Fahrzeuglängsrichtung versteifende Längsrippen (3),
- die Längsrippen (3) sind als geschlossene Hohlprofile ausgebildet mit einer von der Verbindungsebene der Schalen (1, 2) gebildeten Teilungsebene, wobei die Ebene lokale Berge und Täler aufweisen kann.

2. Motorraumverkleidung nach Anspruch 1,
**dadurch gekennzeichnet,**
**dass** die Längsrippen (3) eventuell vorhandene Berg- und Talabschnitte in der Fügeebene zwischen den Schalen (1, 2) mit einem etwa gleichen Hohlprofilquerschnitt durchlaufen.

3. Motorraumverkleidung nach Anspruch 1 oder 2,
**dadurch gekennzeichnet,**
**dass** die Schalen (1, 2) aus urgeformtem Kunststoff bestehen.

4. Motorraumverkleidung nach einem der vorhergehenden Ansprüche,
**dadurch gekennzeichnet,**
**dass** die Schalen (1, 2) miteinander verschraubt, vernietet, verschweißt und/oder verklebt sind.

5. Motorraumverkleidung nach Anspruch 4,
**dadurch gekennzeichnet,**
**dass** die Schalen (1, 2) reib- oder ultraschallverschweißt sind.

6. Motorraumverkleidung nach einem der vorhergehenden Ansprüche,
**dadurch gekennzeichnet,**
**dass** die Schalen (1, 2) lediglich in beabstandeten Teilbereichen fest gegeneinander verankert sind.

7. Motorraumverkleidung nach einem der vorhergehenden Ansprüche,
**dadurch gekennzeichnet,**
**dass** deren Vorderkante Abstand gegenüber einer diese abdeckenden Stoßfängerverkleidung aufweist.

8. Motorraumverkleidung nach Anspruch 7,
**dadurch gekennzeichnet,**
**dass** der Abstand 5 bis 10 mm beträgt.

9. Motorraumverkleidung nach einem der vorhergehenden Ansprüche,
**dadurch gekennzeichnet,**
**dass** der größte Teil der Längsrippen (3) in der oberen Schale (2) nach oben abstehend angeformt ist.

10. Motorraumverkleidung nach einem der vorhergehenden Ansprüche,
**dadurch gekennzeichnet,**
**dass** der größte Bereich der einzelnen Längsrippen (3) jeweils in der oberen Schale (2) ausgebildet ist.

11. Motorraumverkleidung nach einem der vorhergehenden Ansprüche,
**dadurch gekennzeichnet,**
**dass** im vorderen Bereich der oberen Schale (2) ein mit Abstand gegenüber deren Vorderkante verlaufender, oben glatt ausgebildeter, von den Hohlräumen der Längsrippen (3) durchzogener Quersteg (4) vorgesehen ist.
